# EUROPEAN PATENT SPECIFICATION

(11) **EP 1 914 513 B1**
(45) Date of publication and mention of the grant of the patent: **29.06.2016**
(21) Application number: 07113542.0
(22) Date of filing: 31.07.2007
(51) Int. Cl.: G01C 21/32, G01C 21/34

(54) **Method of generating map data, method of retrieving guide route, and in-vehicle navigation apparatus**
Verfahren zur Erzeugung von Kartendaten, Verfahren zur Bestimmung einer Führungsroute und Bordnavigationsgerät für ein Fahrzeug
Procédé de génération de données cartographiques, procédé de détermination d'une route de guidage, et appareil de navigation embarqué à bord d'un véhicule

(30) Priority: 17.10.2006 JP 2006282154
(43) Date of publication of application: 23.04.2008
(73) Proprietor: Alpine Electronics, Inc., Tokyo (JP)
(72) Inventor: Kamata, Takehiko, Iwaki-city, Fukushima (JP)
(74) Representative: Dolleymores

(56) References cited:
- FR-A- 2 852 688
- US-A- 5 369 588
- US-A- 6 134 501
- US-B1- 6 351 707
- US-B1- 7 133 771

## Description

### BACKGROUND OF THE INVENTION

### 1. Field of the Invention

The present invention relates to methods of generating map data in an in-vehicle navigation apparatus. More particularly, the present invention relates to technologies adapted to appropriate route guidance to destinations in roads including traffic circles.

### 2. Description of the Related Art

Typical in-vehicle navigation apparatuses in related art each include a control unit, a storage unit, a display unit, a global positioning system (GPS) receiver, and a detecting unit. The control unit, such as a central processing unit (CPU), controls all processing concerning navigation. The storage unit, such as a digital versatile disk-read only memory (DVD-ROM) or an IC memory card, has map data stored therein in advance. The detecting unit including a gyro and a speed sensor detects the current position and the current direction of the vehicle. The control unit reads out the map data including the current position of the vehicle from the storage unit, displays a map image around the position of the vehicle on the screen of the display unit on the basis of the map data, and superimposes a vehicle-position mark indicating the current position of the vehicle on the map image. The control unit scrolls the map image in accordance with the movement of the vehicle or fixes the map image on the screen and moves the vehicle-position mark in order to allow a user to determine where the vehicle is currently driven at a glance.

Generally, in the in-vehicle navigation apparatuses, intersections of roads are defined as nodes and roads connecting the nodes are defined as road links. The map data is represented by a set of the nodes and the road links.

For example, in a map display device disclosed in Japanese Unexamined Patent Application Publication No. 11-132784, traffic circles which are one of road systems mainly appearing in Europe and the United States and which are also referred to as roundabouts are represented by using nodes and links, and attribute information indicating the traffic circles is set for the nodes and links. Accordingly, it is not necessary to separately store geometric data concerning the traffic circles in map data.

In-vehicle navigation apparatuses normally have functions (route guidance functions) of guiding users so as to easily drive the vehicles to destinations without errors. The CPUs in the in-vehicle navigation apparatuses use the route guidance functions to automatically retrieve optimal routes from start points to destinations (typically, routes having the lowest costs) by simulation calculations, such as breadth-first search or Dijkstra method, using the map data and store the retrieved routes as guide routes. The CPUs display the guide routes on the map images so as to discriminate the guide routes from other roads during driving and, when the vehicles reach positions within predetermined distance from intersections where the vehicles are to change the courses on the guide routes, display arrows indicating which directions the vehicles are to be headed at the intersections in the map images along with the enlarged views of the intersections. Accordingly, the users can grasp the guide routes to the destinations.

The costs are numerical representation of the degrees of appropriateness of the guide routes. The costs are classified into the costs of nodes (points represented by longitudes and latitudes) and the costs of links (portions via which two nodes are connected together, that is, part of roads). The costs of links are values calculated by multiplying distances by coefficients or are estimated times during which the vehicles are driven. The coefficients are defined on the basis of different predetermined rules depending on road types (road classes) indicating ordinary roads or expressways, the number of traffic lanes, or the widths of roads. The costs of nodes are values calculated by multiplication by coefficients defined on the basis of predetermined rules depending on the directions in which the vehicles are headed at the intersections or the presence of traffic signals at intersections.

As described above, in the in-vehicle navigation apparatuses in the related art, routes having the lowest passage costs from the start points to the destinations are basically guided as the guide routes.

In EU member nations, many slip roads (hereinafter also referred to as bypasses) for getting around traffic circles are constructed. Since such bypasses are laid down near traffic circles and driving of vehicles on the bypasses reduces the distances to destinations and also reduces the driving times, compared with driving of the vehicles on traffic circles, it is more convenient for users to drive on the bypasses.

However, in the current map databases, there is little difference between the costs of the nodes at intersections where roads are connected to bypasses of traffic circles and the costs of the nodes at intersections where traffic signals are provided. At the same time, the costs of driving on the traffic circles are lower than that of driving on the bypasses because the traffic circles are not involved in the stop due to traffic signals and have shapes allowing smooth driving.

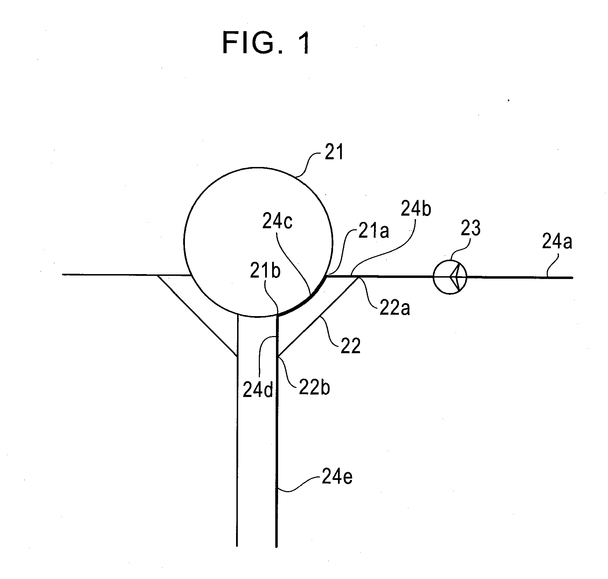

Fig. 1 shows an example of a guide route guided when a traffic circle 21 and a bypass 22 exist between a start point and a destination.

If a route through roads 24a, 24b, 24c, 24d, and 24e and a route through the roads 24a and 24e and the bypass 22 are extracted as candidates for guide routes, the route through roads 24a, 24b, 24c, 24d, and 24e is selected as a guided route in in-vehicle navigation apparatuses at present.

As described above, in the guidance of guide routes at present, the routes through the traffic circles are selected even if the routes including the bypasses are retrieved as candidates for the guide routes. Accordingly, the guidance of guide routes at present has the disadvantage in that the more convenient bypasses are not selected.

The document US6 134 501 A discloses a map database for an in-vehicle navigation apparatus, structuring a road network by nodes representing intersections and links representing road segments, wherein special attribute data called "internal intersection" is added to a road link bypassing an intersection.

### SUMMARY OF THE INVENTION

Accordingly, it is an object of the present invention to provide a map data generating method in an in-vehicle navigation apparatus, according to claim 1.

Accordingly, a map data generating method in an in-vehicle navigation apparatus retrieves a route on the basis of map data in which a road is represented as a set of nodes and road links. The map data generating method includes the steps of detecting a traffic circle from the map data; detecting at least one first road link and at least one second road link, one end of the first road link and one end of the second road link being connected to the traffic circle; detecting at least one third road link connected to the other end of the first road link and to the other end of the second road link; and adding a certain identifier to the third road link.

The cost of the third road link to which the certain identifier is added may be set to a value lower than the cost of a normal road link. The certain identifier may be attribute information indicating that the third road link is a bypass for the traffic circle.

In the map data generating method according to this embodiment of the present invention, roads connected to a traffic circle are detected and a bypass near the traffic circle is identified. The bypass is identified by detecting two roads (a first road link and a second road link) ends of which are connected to the traffic circle and detecting a road link connecting the first road link to the second road link not through the traffic circle (a third road link connected to the other end of the first road link and to the other end of the second road link). Certain attribute information is added to the bypass. In the retrieval of a guide route, the cost of the bypass is set to a value lower than the cost of a normal road link on the basis of the attribute information. Accordingly, priority is given to the route that is provided near the traffic circle and that goes through the bypass, thus improving the convenience for the user.

The number of the third road links may be any one of one, two, and three. The numbers of the first and second road links may be any one of one, two, and three.

In the map data generating method according to this embodiment of the present invention, the numbers of the road links connected to the traffic circle are limited to any one of one, two, and three. The number of the third road links corresponding to the bypass is limited to any one of one, two, and three. Accordingly, since any road that is between two roads connected to the traffic circle and that is apart from the traffic circle is not identified as the bypass, it is possible to avoid a disadvantage, for example, in a case where the time necessary to go through the bypass is longer than the time necessary to go through the traffic circle.

According to an example not part of the present invention, a guide route retrieving method in an in-vehicle navigation apparatus retrieves a route on the basis of map data in which a road is represented as a set of nodes and road links and in which attribute information indicating that a road link near a traffic circle is a bypass is not added to the road link. The guide route retrieving method includes the steps of detecting the traffic circle; detecting at least one first road link and at least one second road link, one end of the first road link and one end of the second road link being connected to the traffic circle; detecting at least one third road link connected to the other end of the first road link and to the other end of the second road link; and setting the cost of the third road link to a value lower than the cost of a normal road link to calculate a passage cost to a destination.

In the guide route retrieving method according to this example, roads connected to a traffic circle are detected and a bypass near the traffic circle is identified in retrieval of a guide route by using map data in which attribute information indicating that a road link near the traffic circle is a bypass is not added to the road link. The bypass is identified by detecting two roads (a first road link and a second road link) ends of which are connected to the traffic circle and detecting a road link connecting the first road link to the second road link not through the traffic circle (a third road link connected to the other end of the first road link and to the other end of the second road link). The cost of the bypass is set to a value lower than the cost of a normal road link to calculate a passage cost. Accordingly, priority is given to the route that is provided near the traffic circle and that goes through the bypass even if the attribute information indicating that the road link near the traffic circle is a bypass is not added to the road link, thus improving the convenience for the user.

According to another example not part of the present invention, a guide route retrieving method in an in-vehicle navigation apparatus retrieves a route on the basis of map data in which a road is represented as a set of nodes and road links and in which attribute information indicating that a road link near a traffic circle is a bypass is added to the road link. The cost of the road link corresponding to the bypass is set to a value lower than the cost of a normal road link to perform route guidance.

The road link corresponding to the bypass may connect a first road link to a second road link, the first road link and the second road link being connected to the traffic circle, and may not go through the traffic circle.

According to another example not part of the present invention, an in-vehicle navigation apparatus includes storing means for storing map data in which a road is represented as a set of nodes and road links and in which attribute information indicating that a road link near a traffic circle is a bypass is not added to the road link; display means for displaying guide information; and control means connected to the storing means and the display means. The control means detects the traffic circle, detects at least one first road link and at least one second road link, one end of the first road link and one end of the second road link being connected to the traffic circle, detects at least one third road link connected to the other end of the first road link and to the other end of the second road link, sets the cost of the third road link to a value lower than the cost of a normal road link to calculate a passage cost to a destination, and displays a guided route in the display

In the in-vehicle navigation apparatus according to this example, in order to update the content of the map data about the road link corresponding to the bypass for the traffic circle, roads connected to the traffic circle are detected and a bypass near the traffic circle is identified. The bypass is identified by detecting two roads (a first road link and a second road link) ends of which are connected to the traffic circle and detecting a road link connecting the first road link to the second road link not through the traffic circle (a third road link connected to the other end of the first road link and to the other end of the second road link). Certain attribute information is added to the bypass. In the retrieval of a guide route, the cost of the bypass is set to a value lower than the cost of a normal road link on the basis of the attribute information. Accordingly, priority is given to the route that is provided near the traffic circle and that goes through the bypass, thus improving the convenience for the user.

### BRIEF DESCRIPTION OF THE DRAWINGS

Fig. 1 is a diagram describing a guide route in related art when a bypass exists near a traffic circle;
Fig. 2 is a block diagram schematically showing an example of the configuration of an in-vehicle navigation apparatus according to a main embodiment of the present invention;
Fig. 3 is a flowchart briefly showing a bypass detecting process according to the main embodiment of the present invention;
Fig. 4 is a first flowchart showing the bypass detecting process in detail according to the main embodiment of the present invention;
Fig. 5 is a second flowchart showing the bypass detecting process in detail according to the main embodiment of the present invention;
Figs. 6A and 6B are diagrams describing the bypass detecting process;
Figs. 7A to 7C illustrate examples of the data structure of a road link;
Figs. 8A and 8B are diagrams describing the bypass detecting process;
Fig. 9 is a diagram describing the bypass detecting process;
Fig. 10 is a diagram describing a guide route guided when a bypass exists near a traffic circle;
Fig. 11 is a flowchart showing a process of retrieving a guide route according to an example not part of the present invention; and
Fig. 12 is a flowchart showing a process of retrieving a guide route according to a second example not part of the present invention.

### DESCRIPTION OF THE PREFERRED EMBODIMENTS

Embodiments of the present invention will now be described with reference to the attached drawings.

### First Embodiment

A configuration of an in-vehicle navigation apparatus and a method of generating map data concerning a bypass for a traffic circle in the in-vehicle navigation apparatus, according to a main embodiment of the present invention,
will now be described.

### Configuration of In-vehicle Navigation Apparatus

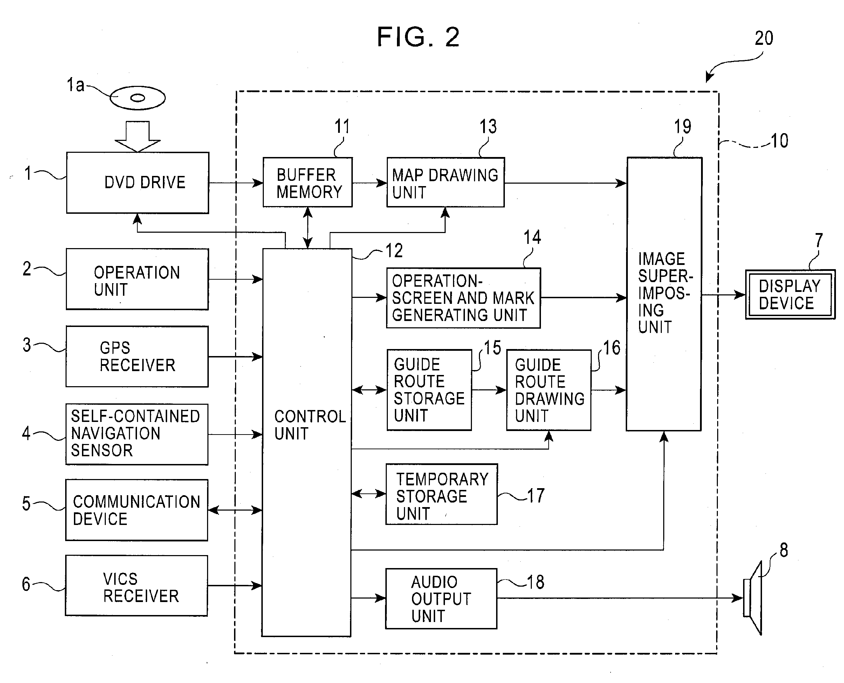

Fig. 2 is a block diagram schematically showing an example of the configuration of an in-vehicle navigation apparatus 20 according to the main embodiment of the present invention.

Referring to Fig. 2, a storage medium 1 in the in-vehicle navigation apparatus 20 has map data and other data stored therein. Although the storage medium 1 is exemplified as a digital versatile disk-read only memory (DVD-ROM) drive, the storage medium 1 may be a hard disk or another storage medium. Each map stored in the storage medium 1 is segmented into certain longitude widths and certain latitude widths in accordance with scales, such as 1/12,500, 1/25,000, 1/50,000, and 1/100,000. Each object, such as a road, a building, or a facility, included in each map is stored as a set of the coordinates of points (nodes), represented by using longitudes and latitudes. Each node represents an intersection of roads. A part of a road between two nodes is referred to as a road link. A road is represented as a set of nodes and road links.

The map data includes (1) a road layer including a road list, a node table, and a list of nodes constituting intersections, (2) a background layer used for displaying roads, buildings, parks, rivers, and so on in a map image, and (3) a character and symbol layer used for displaying characters and map symbols, which indicate the names of administrative sections, such as the names of local authorities, the names of roads, the names of intersections, and so on.

The DVD drive 1 includes road data representing the geometric features of roads used in map matching. The road data includes shape nodes and links between the shape nodes. The distance between two shape nodes differs depending on the geometric feature of the corresponding road.

The node table is a list of all the nodes on a map. The node table includes, for every node, positional information (longitudes and latitudes) and pointers indicating the positions of roads to which the node is connected on the road list.

The list of nodes constituting traffic circles is a set of the positions, on the node table, of the nodes on links (roads) connected to each traffic circle on the map.

An operation unit 2 in the in-vehicle navigation apparatus 20 includes operational buttons used for operating a main body 10 of the in-vehicle navigation apparatus 20. According to the main embodiment of the present invention, the operation unit 2 includes a remote controller transmitter and a remote controller receiver. A user can use the remote controller transmitter to operate the main body 10 of the in-vehicle navigation apparatus 20.

A GPS receiver 3 in the in-vehicle navigation apparatus 20 receives GPS signals supplied from multiple GPS satellites to generate GPS data, such as the longitude, the latitude, the Position Dilution of Precision (PDOP) value, and the Horizontal DOP (HDOP) value, concerning the current position of the vehicle and outputs the generated GPS data. A self-contained navigation sensor 4 in the in-vehicle navigation apparatus 20 includes an angle sensor, such as a gyro, detecting the angle of rotation of the vehicle and a distance sensor generating a pulse for every predetermined driving distance. The self-contained navigation sensor 4 is used to detect a driving speed of the vehicle.

A communication device 5 in the in-vehicle navigation apparatus 20, such as an in-vehicle telephone, communicates with various service centers. A Vehicle Information and Communication System (VICS) receiver 6 in the in-vehicle navigation apparatus 20 receives VICS information transmitted from a radio beacon or an optical beacon.

A display device 7 in the in-vehicle navigation apparatus 20 is, for example, a liquid crystal panel. The main body 10 of the in-vehicle navigation apparatus 20 displays a map around the current position of the vehicle or displays a guide route from a start point to a destination, a vehicle mark, and other guide information in the display device 7. A speaker 8 in the in-vehicle navigation apparatus 20 supplies audio guide information to the user.

The main body 10 of the in-vehicle navigation apparatus 20 includes a buffer memory 11, a control unit 12, a map drawing unit 13, an operation-screen and mark generating unit 14, a guide route storage unit 15, a guide route drawing unit 16, a temporary storage unit 17, an audio output unit 18, and an image superimposing unit 19. The buffer memory 11 temporarily stores map data read out from a DVD-ROM 1a through the DVD drive 1.

The control unit 12, which is a microcomputer, includes programs for navigation (programs used for route retrieval processing and for display control necessary for route guidance based on the route retrieval processing). The control unit 12 performs a variety of processing in accordance with the programs. For example, the control unit 12 detects the current position of the vehicle on the basis of a GPS signal supplied from the GPS receiver 3, calculates the driving speed of the vehicle on the basis of a signal supplied from the self-contained navigation sensor 4, reads out map data to be displayed from the DVD-ROM 1a through the DVD drive 1 and stores the readout map data in the buffer memory 11, and retrieves a guide route from the start point to the destination under search conditions set by using the map data stored in the buffer memory 11.

The map drawing unit 13 uses the map data stored in the buffer memory 11 to generate a map image. The operation-screen and mark generating unit 14 generates various menu screens (operation screens) in accordance with the operational situation and various marks, such as a vehicle position mark and a cursor.

The guide route storage unit 15 stores the guide route retrieved by the control unit 12. Specifically, all the nodes, from the start point to the destination, on the guide route retrieved by the control unit 12 are stored in the guide route storage unit 15. The guide route drawing unit 16 draws the guide route. Specifically, the guide route drawing unit 16 reads out information concerning the guide route from the guide route storage unit 15 and draws the guide route in a color and a line width different from those of other roads in order to display the map.

The temporary storage unit 17 stores link information that is necessary to be temporarily stored in detection of a bypass for a traffic circle and information concerning the bypass.

The audio output unit 18 supplies an audio signal to the speaker 8 on the basis of a signal supplied from the control unit 12.

The image superimposing unit 19 superimposes the various marks and the operation screens generated by the operation-screen and mark generating unit 14 and the guide route drawn by the guide route drawing unit 16 on the map image drawn by the map drawing unit 13 and displays the map image after the superimposition in the display device 7.

In the in-vehicle navigation apparatus 20 according to the main embodiment of the present invention, the control unit 12 identifies a bypass provided near a traffic circle from the map data and adds a certain identifier (attribute information indicating the bypass) to the bypass, as described below. The control unit 12 sets the cost of the road link corresponding to the bypass to a value lower than the cost of a normal road link on the basis of information concerning the identifier to calculate the passage cost of the guide route. Accordingly, if a bypass exits in the traffic circle, it is possible to give priority to a route through the bypass in guidance of the guide route, thus improving the convenience for the user.

### Method of Generating Map Data in In-vehicle Navigation Apparatus

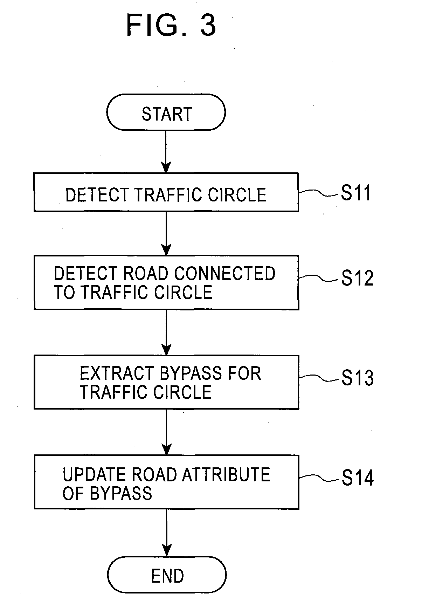

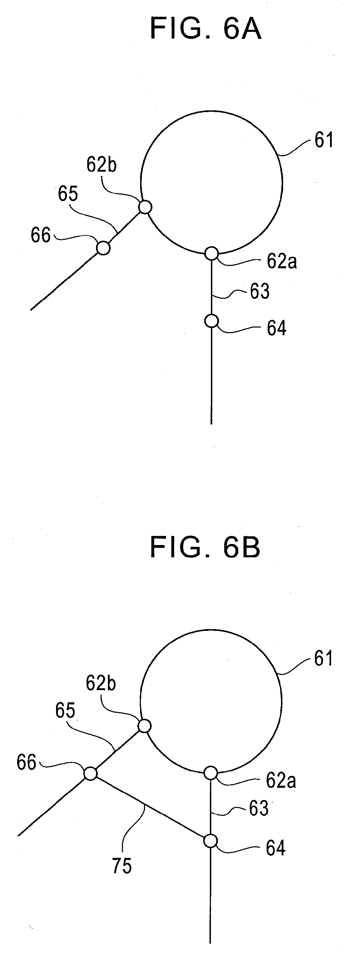

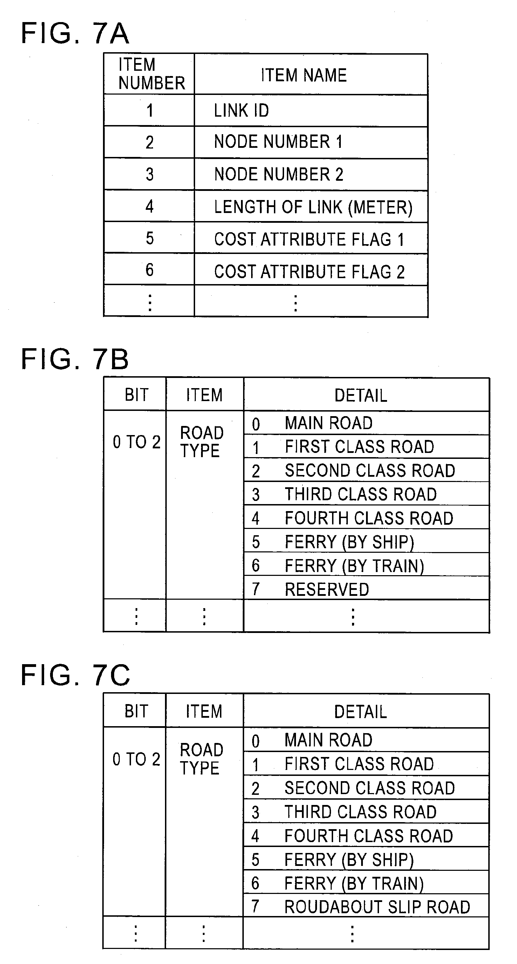

A process of detecting a bypass for a traffic circle and adding attribute information (also referred to as a bypass detecting process) will now be described with reference to flowcharts in Figs. 3 to 5 and Figs. 6A to 9. Figs. 6A and 6B, Figs. 8A and 8B, and Fig. 9 illustrate the detection of a bypass for a traffic circle in stages. Figs. 7A to 7C show examples of the data structure of a road link.

Fig. 3 is a flowchart briefly showing the bypass detecting process.

In Step S11, the control unit 12 detects a traffic circle from map data read out through the DVD drive 1.

In Step S12, the control unit 12 detects a road connected to the traffic circle on the basis of data concerning the traffic circle detected in Step S11.

In Step S13, the control unit 12 extracts a bypass near the traffic circle.

In Step S14, the control unit 12 adds certain attribute information to the link corresponding to the bypass extracted in Step S13.

The above process is performed to the bypasses near all the traffic circles included in the map data.

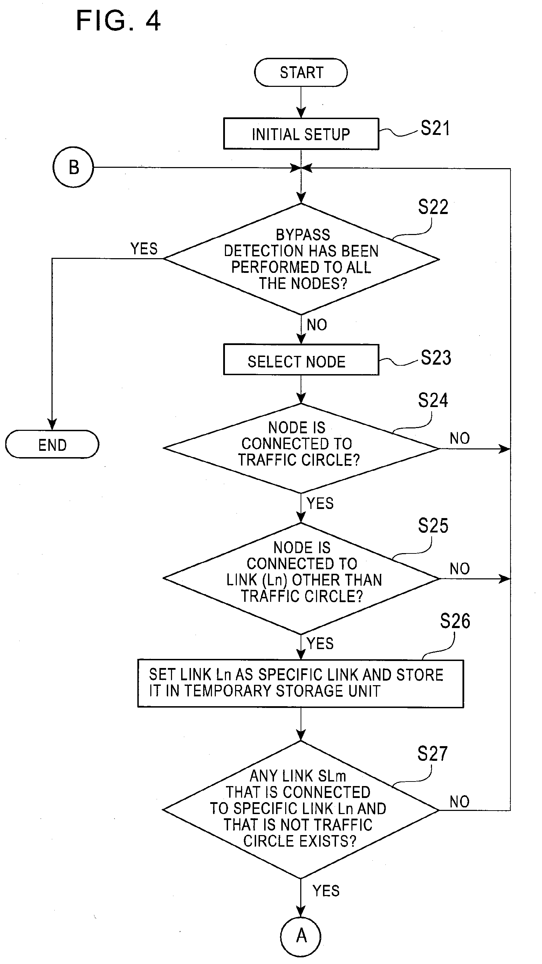

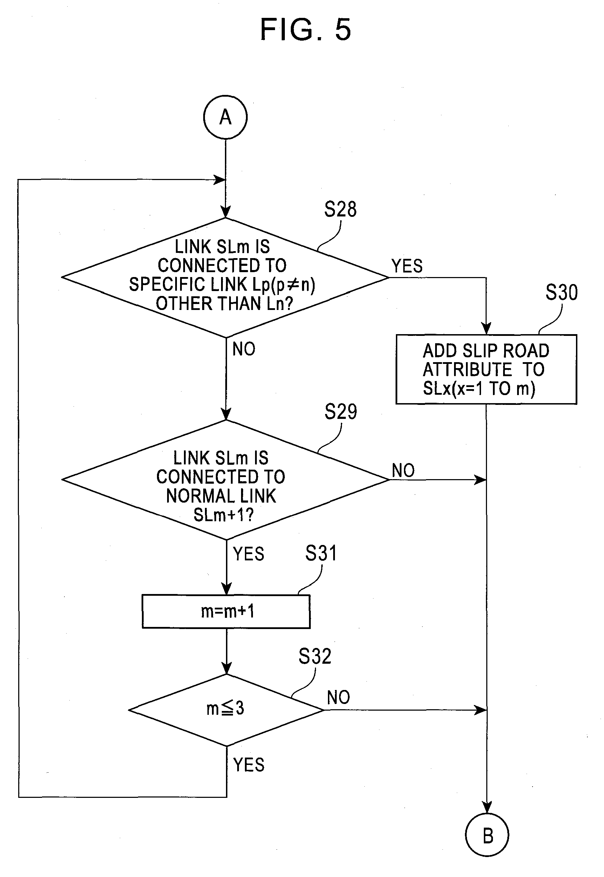

Figs. 4 and 5 show a flowchart describing the bypass detecting process performed by the control unit 12 in detail.

In Step S21, the control unit 12 performs initial setup. In the initial setup, the control unit 12 clears a counter of the number of nodes to be retrieved and a counter m of the number of links on the bypass. The control unit 12 also temporarily clears the temporary storage unit 17 in which the road links connected to the detected traffic circle are stored.

In Step S22, the control unit 12 determines whether the bypass detecting process has been performed to all the nodes in the map data. If the control unit 12 determines that the bypass detecting process has been performed to all the nodes in the map data, the bypass detecting process is terminated.

If the control unit 12 determines that the bypass detecting process has not been performed to all the nodes in the map data, then in Step S23, the control unit 12 selects a node from the map data.

In Step S24, the control unit 12 determines whether the selected node is connected to a traffic circle. The nodes as the data structure representing roads include information (guidance) necessary for guidance at, for example, intersections. For example, a node connected to a traffic circle includes information indicating to the user, on a screen or by a sound, that the road on which the vehicle is currently driven is to enter the traffic circle. Accordingly, the determination of whether such guidance exists allows determination of whether the road is connected to a traffic circle. Referring to Fig. 6A, a node 62a is connected a traffic circle 61 and stores information indicating that the node 62a is connected to the traffic circle.

If the control unit 12 determines in step S24 that the selected node is not connected to a traffic circle, the process goes back to Step S22 to continue the bypass detecting process. If the control unit 12 determines in Step S24 that the selected node is connected to a traffic circle, the process goes to Step S25.

In the example shown in Fig. 6A, the node 62a and a node 62b are connected to the traffic circle 61. It is assumed in the following description that a link 65 connected to the node 62b and a node 66 have already been detected.

In Step S25, the control unit 12 determines whether the node selected in Step S23 (the node 62a in Fig. 6A) is connected to a link Ln other than the traffic circle 61. If the control unit 12 determines that the node is connected to the link Ln other than the traffic circle 61, the process goes to Step S26. If the control unit 12 determines that the link Ln does not exist, the process goes back to Step S22 to continue the bypass detecting process.

Fig. 6B shows an example in which a link Ln 63 exists.

In Step S26 in Fig. 4, the control unit 12 stores the link Ln detected in Step S25 in the storage medium 1 as a specific link.

In Step S27, the control unit 12 determines whether any link SLm that is connected to the specific link Ln and that is not the traffic circle 61 exists. If the control unit 12 determines that the link SLm does not exists, the process goes back to Step S22 because the road corresponding to the specific link Ln is a dead-end road. If the bypass detecting process has not been performed to all the nodes, the process continues the bypass detecting process for a new node.

In the example shown in Fig. 6B, a link SLm 75 that is not the traffic circle exists.

In Step S28 in Fig. 5, the control unit 12 determines whether the link SLm is connected to a specific link Lp (P≠n) other than the specific link Ln. If the control unit 12 determines that the link SLm is connected to the specific link Lp other than the specific link Ln, the process goes to Step S30. If the control unit 12 determines that the link SLm is not connected to the specific link Lp other than the specific link Ln, the process goes to Step S29.

In the example shown in Fig. 6B, the specific link Ln 63 is connected to the link SLm 75 via a node 64 and the link SLm 75 is connected to a specific link Lp 65 via the node 66. The process goes to Step S30 in the example shown in Fig. 6B.

In Step S30, the control unit 12 adds a slip road attribute to a link SLx (x=1...m). In the example shown in Fig. 6B, since the specific link Ln 63 is connected to the specific link Lp 65 via one link, the control unit 12 adds the slip road attribute to the link SL1. The link LS1 corresponds to a bypass for the traffic circle. In Step S30, the control unit 12 clears the counter m.

Figs. 7A to 7C show examples of the data structure of a road link. As shown in Fig. 7A, each road link is represented by using a link ID, a node number 1, a node number 2, the length of the link, cost attribute flags, and so on. The calculation of the passage cost in the retrieval of the guide route is based on the data concerning the road link. Each cost attribute flag represents a road type, the presence of a paved road, a road width, and so on by using a predetermined number of bits. As shown in Fig. 7B, the road type is represented by using three bits. For example, "0" indicates a main road and "2" indicates a second class road in the road type.

In Step S30 in Fig. 5, a Roundabout Slip Road attribute (corresponding to a numerical value "7") is added as the attribute information about the road type in the data structure of the road link, as shown in Fig. 7C.

After adding the slip road attribute to the bypass, the process in Fig. 5 goes back to Step S22 to continue the bypass detecting process.

The number of links of a bypass is not limited to one. In order to identify a bypass including multiple links, Steps S28 to S32 are repeated.

In Step S29, the control unit 12 determines whether the link SLm is connected to a normal road link. If the control unit 12 determines that the link SLm is connected to a normal road link, the process goes to Step S31. If the control unit 12 determines that the link SLm is not connected to a normal road link, the process goes back to Step S22 to detect a new bypass because the road is a dead-end road.

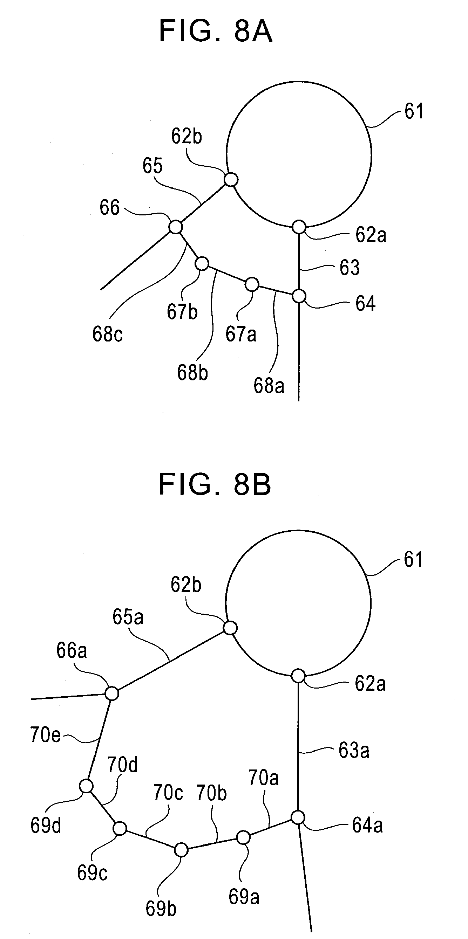

Fig. 8A shows an example in which a link SL2 68b corresponding to the normal road is connected to a link SL1 68a via a node 67a.

In Step S31 in Fig. 5, the control unit 12 increments the counter m indicating the number of links of the bypass by one.

In Step S32, the control unit 12 determines whether the counter m is set to three or less. If the control unit 12 determines that the counter m is set to three or less, the process goes back to Step S28 to continue the identification of the bypass. If the control unit 12 determines that the counter m is set to a value larger than three, the length of the bypass is too long. For example, as shown in Fig. 8B, it is assumed that a road including links 70a to 70e exists as a route that is between a specific link 63a and a specific link 65a and that does not go thorough the traffic circle 61. In this case, since the road including the links 70a to 70e is longer than the route through the traffic circle 61 and the time necessary to go through the road including the links 70a to 70e is longer than the time necessary to go through the route through the traffic circle 61, the road is not suitable for the bypass. Accordingly, if the control unit 12 determines that the counter m is set to a value larger than three, the process terminates the detection of the bypass and goes back to Step S22 to detect a new bypass.

In the example shown in Fig. 8A, Steps S28 to S32 are repeated and the bypass includes three links 68a, 68b, and 68c. The bypass is connected to the specific link Ln 63 via the node 64 and is connected to the specific link Lp 65 via the node 66. In this case, the slip road attribute is added to the links SL1 68a, SL2 68b, and SL3 68c in Step S30.

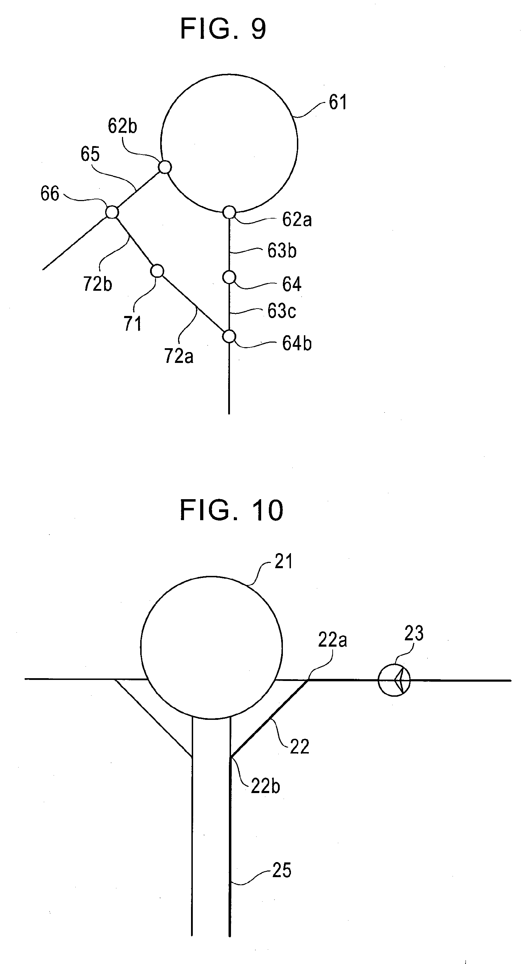

According to the main embodiment of the present invention, the number of the specific links connected to the traffic circle is one, as shown in Step S27 in Fig. 4. However, there are cases in which the number of the specific links connected to the traffic circle is two, that is, specific links 63b and 63c are connected to the traffic circle, as shown in Fig. 9. In order to extract the bypass in such a case, the number of specific links may be two and three. However, if the number of specific links is too large, the bypass is too far from the traffic circle and does not possibly serve as a bypass. Accordingly, although the number of links can be appropriately set, it is set to any one of one, two, and three in the main embodiment of the present invention.

The generation of the map data by performing the process of detecting a bypass for a traffic circle and adding attribute information can give priority to the bypass for the traffic circle in the retrieval of the guide route. As a result, if the traffic circle shown in Fig. 1 and the bypass for the traffic circle are included between the start point and the destination, as shown in Fig. 10, a guide route 25 through a bypass 22 will be guided.

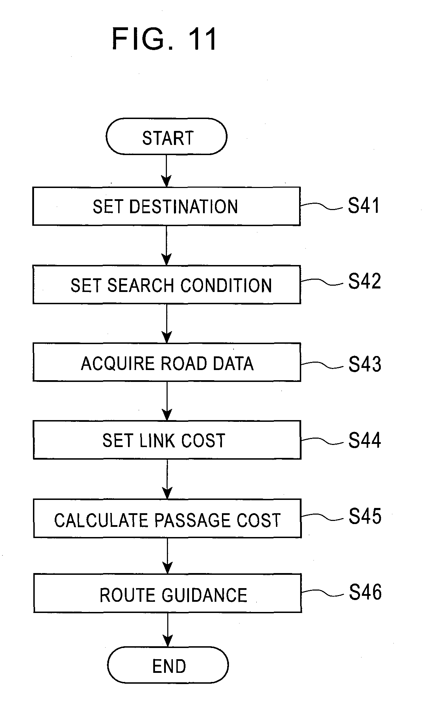

Fig. 11 is a flowchart showing an example of a process of retrieving a guide route when map data in which the attribute information indicating that the bypass is a slip road is added to the bypass. It is assumed in the main embodiment of the present invention that a traffic circle and a bypass for the traffic circle are included between the start point and the destination.

In Step S41, the control unit 12 acquires destination data input with the operation unit 2 and start point data in which the current position of the vehicle, detected on the basis of the signals supplied from the GPS receiver 3 and the self-contained navigation sensor 4, is set as the start point.

In Step S42, the control unit 12 acquires a search condition input with the operation unit 2.

In Step S43, the control unit 12 reads out road data in a range including the start point and the destination from the DVD-ROM 1a through the DVD drive 1, on the basis of the start point data and the destination data, and stores the readout road data in the buffer memory 11.

In Step S44, the control unit 12 sets a link cost of the retrieved route. If the retrieved route includes a bypass, the control unit 12 uses the value corresponding to the attribute information about the bypass to calculate the link cost of the bypass. The value corresponding to the attribute information about the bypass is set to, for example, "7" in the example shown in Fig. 7C. The control unit 12 multiplies the value by a coefficient so as to yield a value lower than the cost of the normal road link. The coefficient is associated with the value of the road attribute and is provided in advance in a table.

In Step S45, the control unit 12 calculates the passage cost of the retrieved route.

In Step S46, the control unit 12 extracts data concerning the route having the lowest passage cost, stores the extracted data in the guide route storage unit 15, and displays the route as a guided route in the display device 7. The process of retrieving a guide route is terminated.

As described above, in the method of generating map data according to the main embodiment of the present invention, roads connected to a traffic circle are detected and a bypass between two roads connected to the traffic circle is identified near the traffic circle. Then, certain attribute information (the slip road attribute) is added to the road link data about the identified bypass. In the retrieval of the guide route, it is possible to set the cost of the bypass to a value lower than the cost of the normal road link on the basis of the attribute information. Consequently, priority is given to the route through the bypass provided near the traffic circle, thus improving the convenience for the user.

The retrieval of a guide route is performed after the bypass for the traffic circle is identified and map data is generated in which the certain attribute information is added to the road link data about the identified bypass in the main embodiment of the present invention. However, the identification of the bypass and the addition of the attribute information may be performed during the retrieval of the guide route.

### Second example

A method of retrieving a guide route in an in-vehicle navigation apparatus according to a second example not part of the present invention will now be described. The method of retrieving a guide route in the second example uses map data in which a slip road attribute is not added to the road link data about a bypass. The in-vehicle navigation apparatus according to the second example is similar to the in-vehicle navigation apparatus according to the main embodiment of the present invention except that any bypass is not identified in the map data.

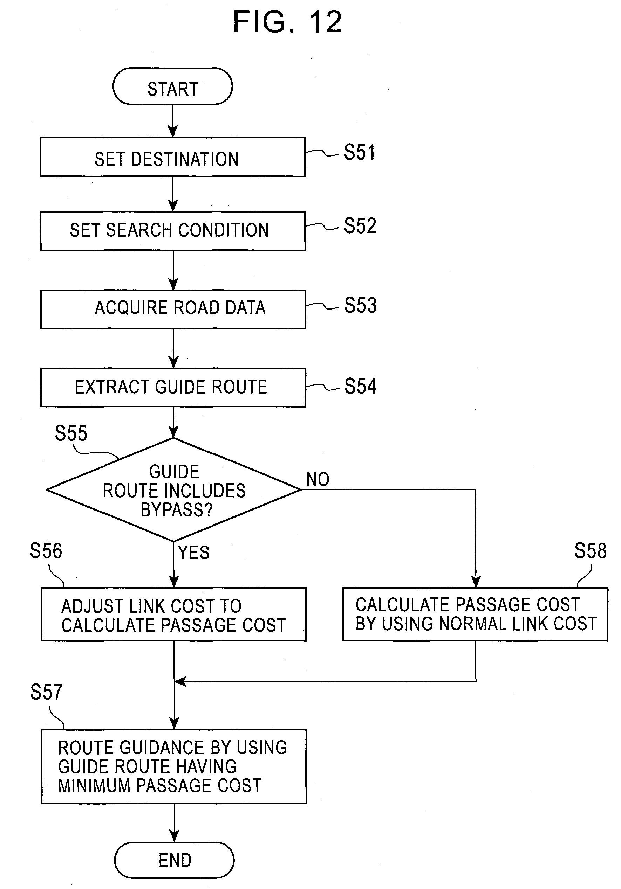

Fig. 12 is a flowchart showing a process of retrieving a guide route according to the second example.

In Step S51, the control unit 12 acquires destination data input with the operation unit 2 and start point data in which the current position of the vehicle, detected on the basis of signals supplied from the GPS receiver 3 and the self-contained navigation sensor 4, is set as the start point.

In Step S52, the control unit 12 acquires a search condition input with the operation unit 2.

In Step S53, the control unit 12 reads out road data in a range including the start point and the destination from the DVD-ROM 1a through the DVD drive 1, on the basis of the start point data and the destination data, and stores the readout road data in the buffer memory 11.

In Step S54, the control unit 12 retrieves a route from the start point to the destination by, for example, the breadth-first search on the basis of the readout road data.

In Step S55, the control unit 12 determines whether the guide route includes a bypass. If the control unit 12 determines that the guide route includes a bypass, the process goes to Step S56. If the control unit 12 determines that the guide route does not include a bypass, the process goes to Step S58.

In Step S56, the control unit 12 adjusts the cost of the road link corresponding to the bypass to a value lower than the cost of the normal road link in the map database to calculate the passage cost.

In Step S58, the control unit 12 uses the cost of the normal road link stored in the map database to calculate the passage cost because the guide route does not include a bypass.

In Step S57, the control unit 12 extracts data about the route having the lowest passage cost and stores the extracted data in the guide route storage unit 15 to perform the route guidance.

In the determination of whether the guide route includes a bypass in Step S55, the bypass detecting method described in the main embodiment of the present invention is used to detect a bypass.

Specifically, two specific links connected the traffic circle are detected, and a road (bypass) that does not go through the traffic circle between the two specific links is extracted.

However, the slip road attribute is added to the road link corresponding to the bypass in Step S30 in Fig. 5 in the first embodiment of the present invention while the map data is not updated and the extracted bypass is stored in the temporary storage unit 17 in the second example.

The determination of whether the guide route includes a bypass is based on the result of the retrieval of the guide route in Step S54. If the guide route includes a bypass, the cost of the road link corresponding to the bypass is adjusted.

The extraction of a bypass may be performed during the retrieval of the guide route or may be performed separately from the retrieval of the guide route.

As described above, in the method of retrieving a guide route in the in-vehicle navigation apparatus according to the second example, whether the retrieved guide route includes a bypass for the traffic circle is determined and, if the guide route includes a bypass for the traffic circle, the cost of the road link corresponding to the bypass is set to a value lower than the cost of the normal road link to calculate the passage cost. Roads connected to the traffic circle are detected and a bypass between two roads connected the traffic circle is identified near the traffic circle. Accordingly, priority is given to the route through the bypass provided near the traffic circle, thus improving the convenience for the user.

## Claims

1. A map data generating method in an in-vehicle navigation apparatus (20), which retrieves a route on the basis of map data in which a road is represented as a set of nodes and road links, the map data generating method comprising the steps of:
detecting a traffic circle (61) from the map data;
detecting at least one first road link (63) and at least one second road link (65), one end (62a) of the first road link and one end (62b) of the second road link being connected to the traffic circle;
detecting a bypass connected to the other end (64) of the first road link and to the other end (66) of the second road link; the bypass comprising at least one third road link (75); and
adding a certain identifier to the bypass, if the number of third road links detected is one, two or three, the certain identifier comprising attribute information indicating that the third road link is a bypass for the traffic circle.

2. The map data generating method according to claim 1,
wherein the first road link comprises a number of specific links between the point at which one end of the first road link meets the traffic circle and the point at which the other end of the first road link meets the bypass; and the second road link comprises a number of specific links between the point at which one end of the second road link meets the traffic circle and the point at which the other end of the second road link meets the bypass; wherein the number of specific links are any one of one, two, and three.

## Patentansprüche

1. Verfahren zur Erzeugung von Kartendaten in einer Bordnavigationsvorrichtung (20), die eine Route auf Basis von Kartendaten abruft, in denen eine Straße als ein Satz Knoten und Straßenverbindungen dargestellt wird, wobei das Verfahren zur Erzeugung von Kartendaten die folgenden Schritte aufweist:
Erkennen eines Kreisverkehrs (61) anhand der Kartendaten;
Erkennen wenigstens einer ersten Straßenverbindung (63) und wenigstens einer zweiten Straßenverbindung (65), wobei ein Ende (62a) der ersten Straßenverbindung und ein Ende (62b) der zweiten Straßenverbindung mit dem Kreisverkehr verbunden sind;
Erkennen eines Bypasses, der mit dem anderen Ende (64) der ersten Straßenverbindung und dem anderen Ende (66) der zweiten Straßenverbindung verbunden ist; wobei der Bypass wenigstens eine dritte Straßenverbindung (75) aufweist; und
Hinzufügen eines gewissen Identifikators zu dem Bypass, wenn die Anzahl der erkannten dritten Straßenverbindungen eins, zwei oder drei ist, wobei der gewisse Identifikator Attributsinformationen aufweist, die darauf hinweisen, dass die dritte Straßenverbindung ein Bypass für den Kreisverkehr ist.

2. Verfahren zur Erzeugung von Kartendaten nach Anspruch 1,
wobei die erste Straßenverbindung eine Anzahl von spezifischen Verbindungen zwischen dem Punkt, an dem ein Ende der ersten Straßenverbindung auf den Kreisverkehr trifft, und dem Punkt, an dem das andere Ende der ersten Straßenverbindung auf den Bypass trifft, aufweist; und die zweite Straßenverbindung eine Anzahl spezifischer Verbindungen zwischen dem Punkt, an dem ein Ende der zweiten Straßenverbindung auf den Kreisverkehr trifft, und dem Punkt, an dem das andere Ende der zweiten Straßenverbindung auf den Bypass trifft; wobei die Anzahl der spezifischen Verbindungen eine beliebige von eins, zwei und drei ist.

## Revendications

1. Procédé de génération de données cartographiques dans un appareil de navigation (20) embarqué à bord d'un véhicule, qui extrait un itinéraire en fonction de données cartographiques dans lesquelles une route est représentée sous la forme d'un ensemble de noeuds et de liaisons routières, le procédé de génération de données cartographiques comportant les étapes consistant à :
détecter un carrefour giratoire (61) parmi les données cartographiques ;
détecter au moins une première liaison routière (63) et au moins une deuxième liaison routière (65), une extrémité (62a) de la première liaison routière et une extrémité (62b) de la deuxième liaison routière étant connectées au carrefour giratoire ;
détecter une route de contournement connectée à l'autre extrémité (64) de la première liaison routière et à l'autre extrémité (66) de la deuxième liaison routière ; la route de contournement comportant au moins une troisième liaison routière (75) ; et
ajouter un certain identifiant à la route de contournement, si le nombre de troisièmes liaisons routières détectées est un, deux ou trois, le certain identifiant comportant des informations d'attributs indiquant que la troisième liaison routière est une route de contournement pour le carrefour giratoire.

2. Procédé de génération de données cartographiques selon la revendication 1,
dans lequel la première liaison routière comporte un nombre de liaisons spécifiques entre le point où une extrémité de la première liaison routière rencontre le carrefour giratoire et le point où l'autre extrémité de la première liaison routière rencontre la route de contournement ; et la deuxième liaison routière comporte un nombre de liaisons spécifiques entre le point où une extrémité de la deuxième liaison routière rencontre le carrefour giratoire et le point où l'autre extrémité de la deuxième liaison routière rencontre la route de contournement ; dans lequel le nombre de liaisons spécifique est l'un quelconque parmi un, deux, et trois.
